# EUROPEAN PATENT APPLICATION

(11) **EP 1 988 664 A1**
(43) Date of publication of application: **05.11.2008**
(21) Application number: 07251802.0
(22) Date of filing: 30.04.2007
(51) Int. Cl.: H04L 12/28, H04Q 11/04, H04M 11/06

(54) **Communications network**

(71) Applicant: British Telecommunications Public Limited Company, London EC1A 7AJ (GB)
(72) Inventor: The designation of the inventor has not yet been filed
(74) Representative: Lloyd, Barry George William

(57) **Abstract**

The present invention provides a hybrid communications network (100), in which a customer may be connected to a copper access network (200) or an optical fibre access network (300) by a network node (400). By providing power from a network terminal (600), a customer causes the node (400) to be connected to the optical fibre access network (300); if power is lost or the network terminal (600) disconnected then the node will connect to the copper access network (200).

## Description

The present invention relates to a communications network, and in particular a network that allows a customer to connect to either a copper access network or to an optical fibre access network.

The copper access network has been used for many years to provide basic telephony services. There has been a recent trend to also use the copper access network to provide broadband services, conventionally using digital subscriber line (DSL) technology. Typically this allows services having data rates of several Mbps to be supplied: the ADSL2 standard enables data rates of up to 12 Mbps and the ADSL2+ standard enables data rates of up to 24 Mbps.

One of the disadvantages of DSL is that the copper access networks that are used to support DSL were never designed to carry high speed data services. Conventional telephony services are provided using an analogue signal that occupies a few kilohertz of the available frequency spectrum and the DSL signals are transmitted at higher frequencies, alongside the analogue telephony signals. The maximum data rate that can be achieved using DSL is limited by the length of the cable between the telephone exchange and the customer, the diameter of the copper wires and the condition of the network. This can make it difficult for a DSL supplier to provide a consistent level of service to different customers.

It is expected that there will be a demand for high speed data services that can not be met by DSL-based services, for example 100 Mbps and greater. It is believed that such data services are most likely to be supplied using optical fibre in part, or all, of the access network. Point-to-point-fibre systems are used to provide services direct to customers and to remote nodes at an intermediate point along the existing metallic path. From this point a number of customers may be served. To save feeder fibre installation cost for mass-market applications passive optical networks (PONs) are a well-known network architecture in which optical splitters are used to connect a single optical fibre from a telephone exchange with multiple customers, with one PON typically serving up to 32 customers. A PON may be implemented such that the entire network consists of optical fibre (often referred to as Fibre To The Premises [FTTP]) or such that the fibre extends only part of the way from the exchange to the customer premises. Commonly, the fibre may extend to a street side cabinet (sometimes referred to as a primary connection point (PCP)) or to a distribution point (DP) located at or near to a telegraph pole or underground link to the customer premises. The fibre will be terminated at a node that is connected to the customer premises using a pair of untwisted copper wires (referred to as UTP). In general, the greater the ratio of fibre to UTP, the greater the performance of the access network and the greater the cost of installing the network.

The main barrier to the widespread deployment of optical fibre in the access network is commercial, not technical. As of June 2006, the UK had 33.7 million exchange lines and 11.5 million broadband users (Ofcom Telecommunications Market Data Tables, Quarter 2, 2006). Although it is likely that the increase in broadband users will be significantly greater than that of exchange lines, it is clear that there is little value in deploying advanced optical networks to all customers when over half of all customers only use basic telephony services. Rather than deploying fibre to all customers, there is a need to able to provide a hybrid network, in which a fibre overlay is provided that enables high speed data services to be supplied via fibre to some customers, whilst leaving other customers receiving telephony (and/or basic data services using DSL) over the legacy copper network. Such a hybrid network should allow a user to be transferred easily from the basic services provided over the copper network to the advanced services provided over the hybrid fibre network, and *vice versa.* Furthermore, it is possible to power a standard telephone using the electrical signals sent from the exchange. For DSL, the greater power demands of a DSL modem require that the customer must power the DSL modem (remote powering of the DSL modem would severely limit the effective range of DSL), meaning that telephony services are lost in the event of a power loss.

EP-B-1 210 801 discloses an arrangement in which exchange equipment can detect that a VoDSL (Voice over DSL) modem has ceased to operate (i.e. through loss of power at the customer premises, or reversion to save power when the data network is not in use) and can then reconfigure the VoDSL modem to revert to POTS by diverting the signals around the modem via suitable switches. Conventional POTS can then can be operated using the line voltages supplied from the exchange. Once local power has been restored then it is possible for the modem to be returned to VoDSL operation.

Applicant's co-pending application WO 2005/043880 discloses an arrangement in which a node is provided in a copper access network, separating the transmission line into a first and a second section. The node modifies the signals received from the exchange such that they have a different frequency from electrical power signals (which may be conventional DC). This allows the node to be powered from the customer's premises without interfering with the POTS signals.

According to a first embodiment of the present invention there is provided a communications network comprising: a copper access network; an optical fibre access network; a network node comprising a first input that is connected to the copper access network, a second input that is connected to the optical fibre access network and an output that is connected to a customer network terminal; wherein, in use, the network node connects either the copper access network or the optical fibre access network to the customer network terminal, the node connecting the access network in response to a signal received from the customer network terminal.

According to a second embodiment of the present invention there is provided a method of operating a communications network, the communications network comprising a node that is connected to an optical fibre access network, a copper access network and a customer network terminal, the method comprising the steps of: i) at the node, detecting the presence of a signal received from the customer network terminal; and ii) connecting the customer network terminal to the copper access network or the optical fibre access network in accordance with the result obtained in step i).

According to a third aspect of the present invention there is provided a node for use in a communications network, the node being connected to a copper access network, an optical fibre access network and a customer network terminal, the node, in use, being configured to connect either the copper access network or the optical fibre access network to the customer network terminal in accordance with a signal received by the node from the customer network terminal.

According to a fourth aspect of the present invention there is provided a network terminal comprising: means for receiving a signal from a copper access network; means for receiving a signal from an optical fibre access network; and means for transmitting a signal to a node, wherein, in use, the transmission of a signal determines whether the network terminal receives a signal from the copper access network or the optical fibre network.

The present invention solves a number of problems that are not addressed by known prior art solutions. Firstly, the present invention provides a hybrid fibre/DSL remote node that can be powered from the customer premises. The node can be installed prior to the provision of the high-speed data services provided via the optical fibre access network yet still allows the customer to receive legacy services such as telephony and broadband via conventional DSL. The high-speed data services can then be provisioned by the supply of an electrical signal to the node from the customer premises, causing the node to switch from the copper access network to the optical fibre access network. This means that the switch to the high-speed data services can be made without the need to send an engineer to the customer premises.

The node provides the further advantage that in the event of a power failure then the node will revert to the copper access network, allowing the customer to access legacy telephony services (which is powered from the exchange). Thus, the loss of electrical power does not mean that a customer will lose telephony services. Furthermore, if there is a loss of signal from the optical fibre access network then this event can be used to cause the node to switch to the copper access network such that the customer is still able to access telephony services (and other legacy services) in the event of a failure in the optical fibre access network.

These advantages all combine to enable the efficient and cost effective deployment of high-speed data services using fibre in the access network. Nodes can be supplied to customer's lines as requested, or where market research indicates that customers are likely to have a demand for such services. A customer can activate the service by powering the line and in the event that a customer moves house or changes supplier, the line can revert to legacy services simply through the customer removing power from the line.

The present invention will now be described in greater detail with reference to the following Figures, which are provided by way of example only, in which:
Figure 1 shows a schematic depiction of a communications network according to an aspect of the present invention;
Figure 2 shows a schematic depiction of a remote node according to an aspect of the present invention;
Figure 3 shows a schematic depiction of a particular embodiment of a node according to an aspect of the present invention;
Figure 4 shows a schematic depiction of network termination equipment (NTE) according to an aspect of the present invention; and
Figure 5 shows a schematic depiction of a further embodiment of network termination equipment (NTE) according to an aspect of the present invention.

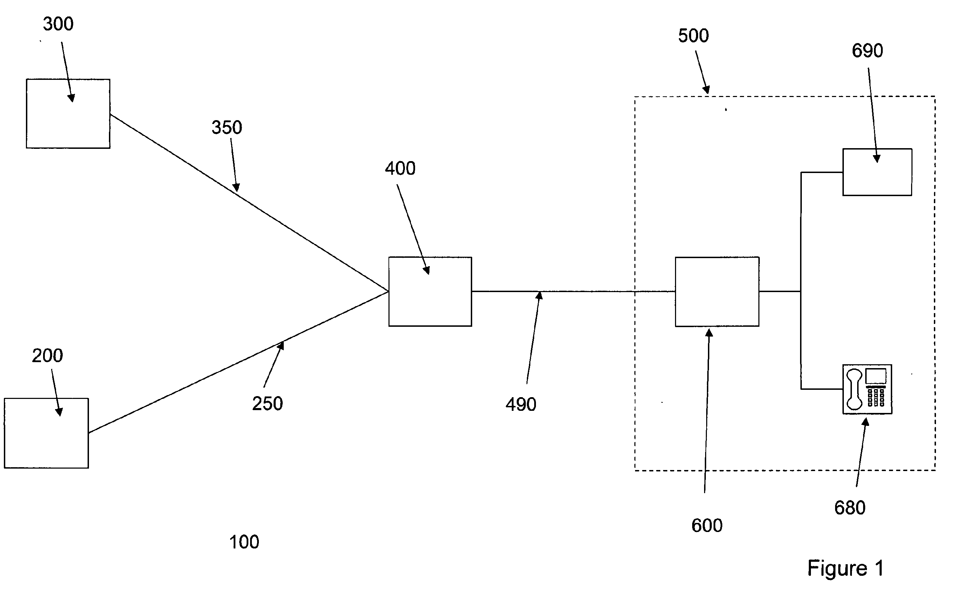

Figure 1 shows a schematic depiction of a communications network 100 according to an aspect of the present invention. The communications network comprises a network node 400 that connects a customer premises 500 to a copper access network 200 and to a fibre access network 300. The node is connected to the copper access network 200 via a copper cable 250 and to the a fibre access network 300 via optical fibre cable 350. For the sake of clarity, conventional network infrastructure of the copper access network (for example primary connection points, etc.) and the fibre access network (splitter locations in a PON, etc.) have not been shown in Figure 1. The node 400 is connected to the customer premises 500 using a length of unshielded twisted pair (UTP) cable 490. The UTP cable is terminated at network termination equipment (NTE) 600, which is located at the customer premises. The NTE enables a telephone 680 to be connected to the network, as well as a personal computer or other similar device 690. It will also be understood that a node will connect a plurality of NTEs to the copper access network (or the fire access network) but for the sake of clarity, the present invention will be described in the context of the connection of a single NTE to the node.

As will be described below in greater detail, when no power is applied to the node from the customer premises, the node is inoperable and the customer premises are connected to the copper access network 200, such that the user has access to POTS and conventional DSL services. If power is supplied to the node from the customer premises then the node is activated such that the node receives signal from the optical access network 300 and converts these signals into a data signal that can be transmitted to the NTE over the UTP cable. The data signals may be DSL-based as the performance of the UTP cable and the shortened cable length will allow transmissions at increased data rates when compared with DSL supplied over the entire length of the access network.

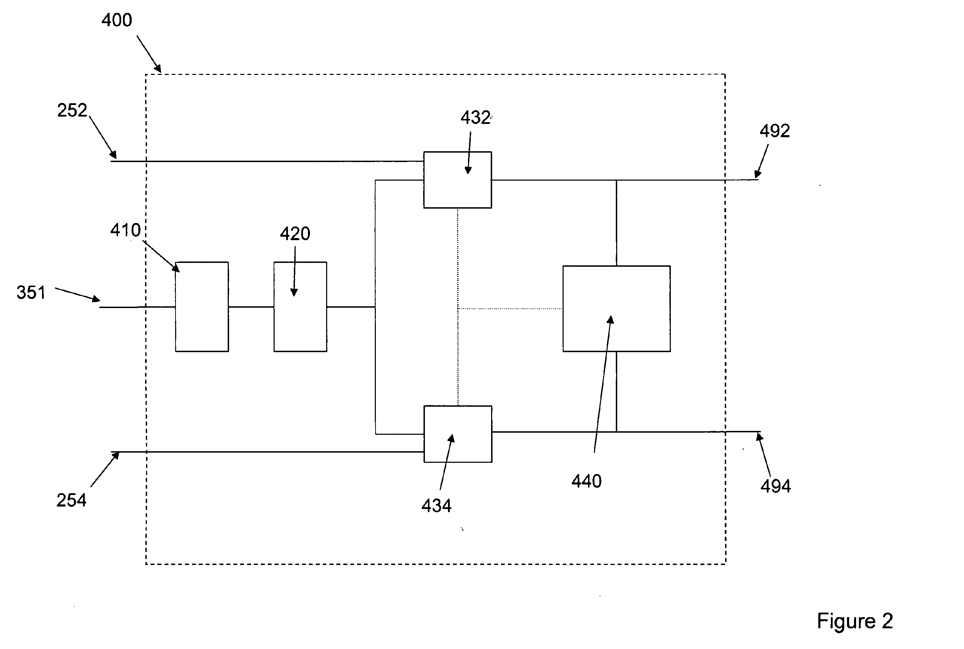

Figure 2 shows a schematic depiction of a remote node 400 according to an aspect of the present invention. The node is connected to two input copper wires 252 and 254, which comprise a part of the copper access network 250, and an input optical fibre 351, which comprises a part of the fibre access network 350. The node is also connected to two output copper wires 492 and 494, which comprise the UTP cable 490. The node further comprises switching means 432 and 434, which are controlled using control means 440. The optical fibre 351 is terminated by an optical network terminal (ONT) 410, the output of which is connected to a VDSL modem. In turn, the VDSL modem is connected to an input of the switching means. Furthermore, the copper wires 252 and 254 are connected to a further input of the switching means 432 and 434.

In use, the control means 440 detects whether power is being fed from the customer premises over the UTP cable. If no power is detected, then the control means causes the switching means 432 and 434 to connect the input copper wires 252 and 254 to the UTP wires. Thus, the customer receives POTS signals from the copper access network, via the UTP cable 490.

If the control means detects that power is being sent over the UTP cable, then the switching means 432 and 434 will connect the output of the VDSL modem to the UTP wires. This causes the ONT and the VDSL to be powered using the electricity being sent over the UTP cable. Thus, data sent from the optical access network will be received from the optical fibre 351, converted from an optical signal to an electrical signal by the ONT 410 and then modulated by the VDSL modem in order for the signal to be transmitted over the UTP cable. It will be seen that the present invention allows the mode of operation of the node to be determined solely by the presence or absence of power from the customer premises.

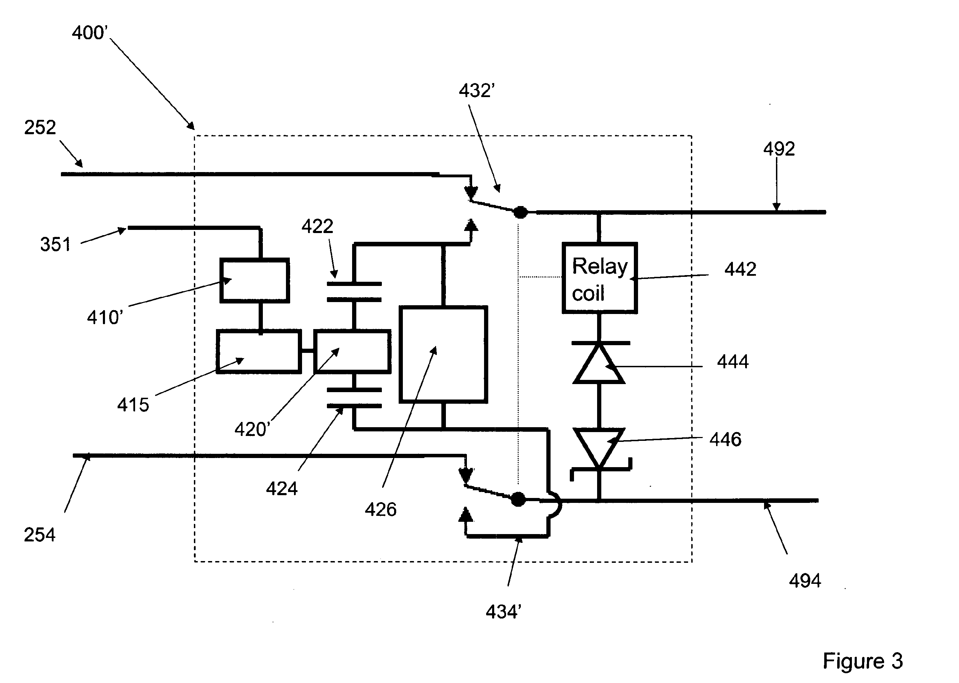

Figure 3 shows a schematic depiction of a particular embodiment of a node 400' according to an aspect of the present invention. Similarly to the node described above with reference to Figure 2, the node 400' is connected to the access network by copper wires 252 and 254: copper wire 252 is at 0V and copper wire 254 is at -50V (as is conventional in the UK telephone network). The wires 492, 494 comprising the UTP cable are connected together by a relay coil 442, a diode 444 and a 50V Zener diode 446. The optical fibre 351 is received by an optical network unit (ONT) 410', the output of which is fed to a VDSL modem 420' via a data switch 415. The data switch 415 switches data received from the optical network to the appropriate VDSL modem. The outputs of the VDSL modem 420' are connected to switches 432' and 434' via capacitors 422 and 424, with a power regulator 426 being connected in parallel with the capacitors.

If no electrical power is applied to the UTP cable then the switches 432' & 434' connect the copper wires 252 and 254 to the UTP wires 492 and 494, and POTS signals and the power supplied from the copper network exchange will be available to the customer. If a voltage of 60V is applied to UTP wire 494, and a voltage of 0V to UTP wire 492, then the line voltage will cause current to flow through the relay coil, causing the switches 432' & 434' to activate. This will cause the UTP cable to be connected to the power regulator 426, such that the VDSL modem, switch and ONT (along with ancillary electronic subsystems that are not shown) to be powered up. Thus, data that is received over the optical fibre will be converted into an electrical VDSL signal that can be transmitted to the customer premises via the UTP cable. If the power supplied from the customer premises is lost, then the relay coil will be de-energised and the switches will connect the UTP cable back to the copper wires 252 and 254 of the copper access network.

The impedance of the relay coil the diodes have a combined load which is sufficiently high that they do not impede the operation of any POTS services which pass through the node. The diodes also prevent the node from being activated in response to any signals that originate from the copper access network exchange such as ringing signals or calling line identification services.

The applicant's patent EP- B-0 719 844 discloses an arrangement in which a remote unit is connected to a plurality of customer lines, using a power sharing scheme. It will be understood that a similar arrangement may be used with a node according to an embodiment of the present invention.

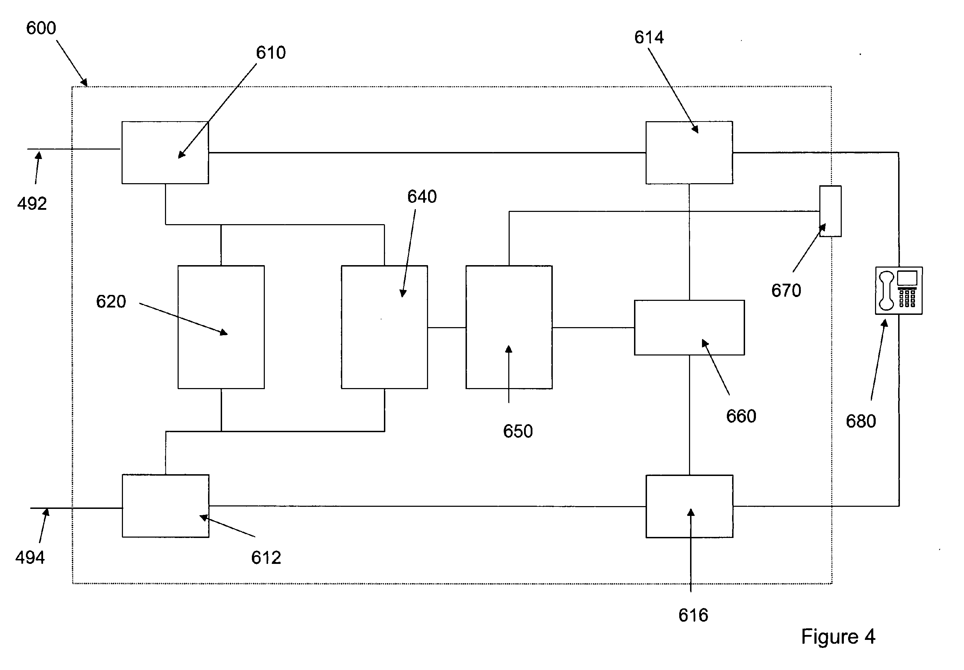

Figure 4 shows a schematic depiction of network termination equipment (NTE) 600 according to an aspect of the present invention. The NTE is connected to the UTP cables via copper wires 492 and 494: these wires are connected to first and second input switches 610 & 612. The NTE further comprises first and second output switches 614 & 616, power supply unit (PSU) 620, VDSL modem 640, data switch 650, VolP unit 660 and data port 670. The first and second output switches together form an interface to which a telephone 680 may be connected.

The first and second input switches 610 & 612 are connected to the first and second output switches 614 & 616 such that when there is no power supplied to the first and second input switches 610 & 612 from the PSU, the UTP wires 492 and 494 are connected to the first and second output switches 614 & 616. As discussed above, when no power is supplied to the node, the node connects the copper access network to the UTP cable, such that the NTE is able to receive POTS signals.

If the PSU is activated then this also causes the VDSL modem 640, data switch 650 and VolP unit 660 to be activated. The activation of the PSU additionally causes first and second input switches 610 & 612 to be energised such that UTP wires 492 and 494 are connected to the PSU and the VDSL modem. As discussed above, the connection of the UTP wires to the PSU causes the node to be activated, such that the VDSL modem in the node is activated and connected to the optical fibre access network. Thus, optical signals from the optical access network are converted to VDSL signals at the node, transmitted across the UTP cable and then received by the VDSL modem 640 within the NTE. Any transmitted data is sent from the VDSL to the data switch 650, which separates the received data such that any VolP data is extracted and sent to the VolP unit 660. The VolP unit can extract a conventional telephony signal from any VolP packets. The telephony signal can be sent to the telephone 680 via comprises first and second output switches 614 & 616. Other data packets can be sent to data port 670, to which a personal computer, router, wireless access point, etc, can be connected. When the PSU is deactivated, then the power will be removed from the UTP cable, causing the node to deactivate and to switch POTS signals from the copper access network to the UTP cable and the NTE to switch the POTS signals to the telephone.

The first and second output switches can be activated such that the output of the VolP unit is sent to the telephone by the activation of the VolP unit when the PSU is activated. Alternatively, there may be a direct connection between the PSU and the first and second output switches such that the activation of the PSU causes the outputs of the VolP unit to be connected to the telephone. The NTE may further comprise monitoring means that can detect when signals are not being received by the VDSL modem, indicating that there has been an equipment failure at the node or that there has been a fault in the optical fibre connecting the node to the optical fibre access network. If such a condition is detected then the PSU is deactivated such that the node will switch back to the copper access network, allowing the NTE to receive POTS signals. The PSU may comprise a battery (which may be rechargeable) which allows the NTE and the node to operate in the event that mains power is lost.

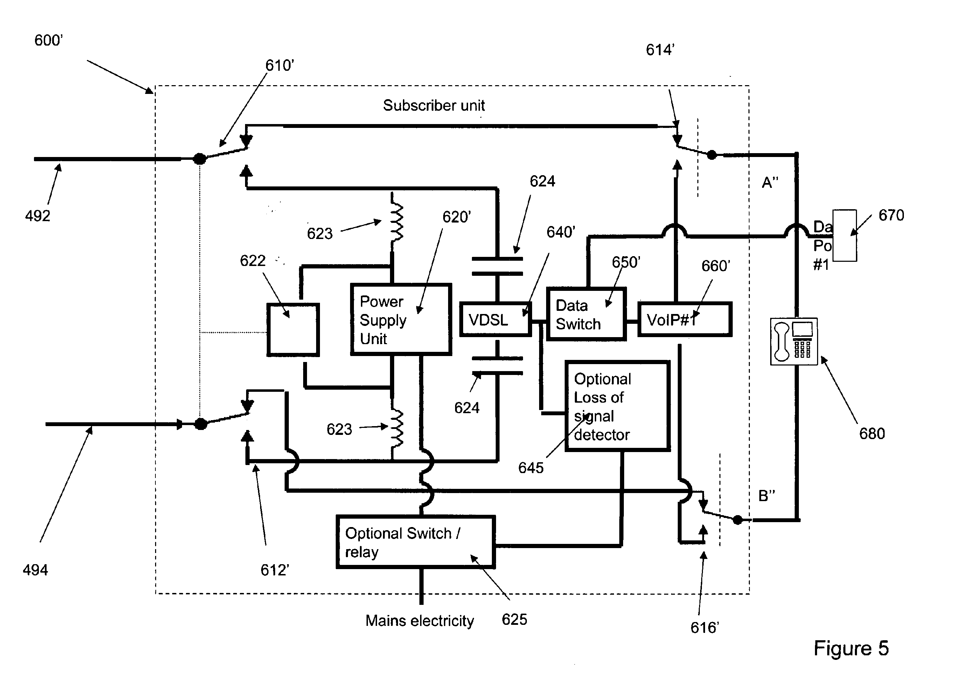

Figure 5 shows a schematic depiction of a further embodiment of network termination equipment (NTE) 600' according to an aspect of the present invention. NTE 600' comprises first and second input switches 610' & 612', first and second output switches 614' & 616, PSU 622', relay coil 622, inductors 623, capacitors 624, power switch 625, VDSL modem 640', signal detector 645, data switch 650', VolP unit 660' and data port 670'. The NTE provides an interface to which a telephone 680 may be connected.

The PSU is connected to the first and second input switches in parallel with the relay coil 622 and the VDSL modem: an inductor 623 is connected in series between the PSU and each of the input switches and a capacitor 624 is connected in series between the VDSL modem and each of the input switches. As described above with reference to Figure 3, when the PSU is activated the relay coil is energised and this causes the first and second input switches to switch such that the PSU is connected to the UTP cable. This in turn causes the node to be activated such that the node connects the optical fibre access network to the UTP cable and that the VDSL modem in the node is activated. The deactivation of the PSU will cause the first and second input switches to switch back, such that the UTP cable is no longer connected to the VDSL modem and the PSU. This causes the node to connect the UTP cable to the copper access network and for the node VDSL modem to be deactivated. Accordingly, POTS signals will be received at the first and second output switches of the NTE 600'.

The NTE 600' further comprises a signal detector 645 which monitors the output from the VDSL modem. If the signal detector detects that the VDSL modem is not outputting a signal then it will cause the power switch 625 to deactivate the PSU. Thus, if the NTE is not able to receive signals that originate from the optical fibre network (for example, due to a break in the network) then the NTE will cause the node to revert to the copper access network. It is preferred that the PSU applies a voltage of 60V to UTP wire 494 and a voltage of 0V to UTP wire 492: referring to the node discussed above with reference to Figure 3, such a voltage is greater than the breakdown voltage of the Zener diode 446 and thus causes the relay 442 to be activated; it will be understood that a different voltage may be applied to UTP wire 494 as long as it is sufficient to cause the breakdown of the Zener diode.

It will be understood that the design of the nodes and the NTEs described above with reference to Figures 2-6 may be altered as long as they still provide the same functionality. For example the relays and the contact switches disclosed Figures 3 & 5 could be replaced by other electrically or electronically actuated switches. The power detection circuit shown in Figure 3 (comprising relay 442, diode 44 & Zener diode 446) could be replaced by an apparatus that provides the same functionality. The previous discussion has only referred to the use of VDSL to transmit data from the optical access network to the NTE: it will be readily apparent that other transmission protocols or technologies may also be used, as long as they can provide sufficient bandwidth over the length of UTP cable that is likely to be present between the node and the customer premises.

## Claims

1. A communications network comprising:
a copper access network;
an optical fibre access network;
a network node comprising a first input that is connected to the copper access network, a second input that is connected to the optical fibre access network and an output that is connected to a customer network terminal;
wherein, in use, the network node connects either the copper access network or the optical fibre access network to the customer network terminal, the node connecting the access network in response to a signal received from the customer network terminal.

2. A communications network according to Claim 1, wherein the a signal received from the customer network terminal is a electrical power signal.

3. A communications network according to Claim 2, wherein the node connects the optical fibre access network to the customer network terminal when the node receives an electrical power signal from the customer network terminal.

4. A communications network according to any preceding Claim, wherein, in use, the node connects the copper access network to the customer network terminal when the node does not receive an electrical power signal from the customer network terminal.

5. A communications network according to Claim 3, wherein the node connects the copper access network to the customer network terminal when a loss of signal from the optical fibre access network is detected.

6. A method of operating a communications network, the communications network comprising a node that is connected to an optical fibre access network, a copper access network and a customer network terminal, the method comprising the steps of:
i) at the node, detecting the presence of a signal received from the customer network terminal; and
ii) connecting the customer network terminal to the copper access network or the optical fibre access network in accordance with the result obtained in step i).

7. A method according to Claim 6, wherein if in step i) the node detects an electrical power signal from the customer network terminal, then in step ii) the customer network terminal is connected to the optical fibre access network.

8. A node for use in a communications network, the node being connected to a copper access network, an optical fibre access network and a customer network terminal, the node, in use, being configured to connect either the copper access network or the optical fibre access network to the customer network terminal in accordance with a signal received by the node from the customer network terminal.

9. A node according to Claim 8, wherein the node is connected to the customer network terminal via a metallic cable such that the node can receive an electrical power signal from the customer network terminal.

10. A node according to Claim 8 or Claim 9, wherein the node is configured, in use, to switch the optical fibre access network to the customer network terminal when the node receives an electrical power signal from the customer network terminal.

11. A node according to Claim 8 or Claim 9, wherein the node is configured, in use, to switch the copper access network to the customer network terminal when the node does not receive an electrical power signal from the customer network terminal.

12. A node according to any of Claims 9 to 11, wherein the node further comprises detection means to determine whether the an electrical power signal has been received from the customer network terminal.

13. A node according to any of Claims 8 to 12, wherein the node further comprises an optical detector for receiving a signal from the optical fibre access network and a modem for transmitting data to the customer network terminal.

14. A network terminal comprising: means for receiving a signal from a copper access network; means for receiving a signal from an optical fibre access network; and means for transmitting a signal to a node, wherein, in use, the transmission of a signal determines whether the network terminal receives a signal from the copper access network or the optical fibre network.
